# EUROPÄISCHE PATENTSCHRIFT

(11) **EP 2 353 817 B1**
(45) Veröffentlichungstag und Bekanntmachung des Hinweises auf die Patenterteilung: **01.11.2017**
(21) Anmeldenummer: 11000409.0
(22) Anmeldetag: 20.01.2011
(51) Int. Cl.: B23Q 9/00

(54) **HOLZFLICKSYSTEM**
WOOD PATCHING SYSTEM
SYSTÈME POUR PIÈCE COLLÉE EN BOIS

(30) Priorität: 06.02.2010 DE 102010007057
(43) Veröffentlichungstag der Anmeldung: 10.08.2011
(73) Patentinhaber: Lehmann, Andreas, 63916 Amorbach (DE)
(72) Erfinder: Lehmann, Andreas, 63916 Amorbach (DE)
(74) Vertreter: Pöhner, Wilfried Anton

(56) Entgegenhaltungen:
- EP-A1- 0 144 707
- DE-A1- 3 911 030
- DE-A1- 4 238 072
- DE-C- 834 750
- US-A- 1 005 546
- US-A- 2 042 839
- US-A- 3 298 407
- Holz Wieser GmbH: , 15 July 2003 (2003-07-15), Retrieved from the Internet: URL:http://www.holz-wieser.de/produkte/few i-bedienungsanleitung-0703.pdf [retrieved on 2015-11-04]

## Beschreibung

Die Erfindung bezieht sich auf ein Holzflicksystem zum Flicken von Fehlstellen in Holzflächen gemäß Oberbegriff des Anspruchs 1. Ein solches Holzflicksystem ist bekannt aus dem Dokument US1005546A1. Wenn ein Baum in Holzplatten und andere Holzstücke zersägt wird, dann werden dabei die um die Stammmitte konzentrisch herum gebildeten zylindermantelförmigen Jahresringe zerschnitten und dadurch darin eingebettete "Astlöcher" sichtbar, die durch das Herauswachsen eines Astes aus dem noch sehr jungen Baumstamm entstanden sind und später durch hinzukommende Jahresringe überwuchert worden sind. Innerhalb eines solchen Astloches verlaufen die Holzfasern quer zur Schnittfläche. Da sie im Gefüge des Baumstammes keine tragende Funktion mehr ausgeübt haben, sind sie abgestorben und daher oft abgedunkelt. Dadurch bilden sie auf der Oberfläche des herausgeschnittenen Holzstückes optisch störende, dunkle Punkte. Sie sind aber auch ein Nachteil bei der Belastbarkeit des Holzstückes, da an dieser Stelle die Holzfasern nicht über das gesamte Holzstück hinweg durchlaufen, sondern unterbrochen sind.

Eine weitere "Fehlstelle" sind Risse im Holz, die z.B. durch Schwund beim Trocknen des Holzes entstanden sind.

Aus diesen Gründen sind rechteckige Holzflecken auf aktuellem Stand der Technik nicht gebräuchlich.

Ihre rechteckige Form wird jedoch durch die zunehmende Verbreitung von sog. Leimholz wieder hoch aktuell, das aus zahlreichen, miteinander verklebten, quaderförmigen Holzstücken besteht. Die Oberfläche von derartigem Leimholz besteht im Prinzip aus zahlreichen, aneinander grenzenden Rechtecken.

nau abgegrenzten Bereich des Holzstückes zu entnehmen und in die entstandene Vertiefung ein daran geometrisch angepasstes Holzstück, den sog. "Holzflicken" einzuleimen. Dafür sind zahlreiche, verschiedene Formen bekannt.

Das Patent DE 42 31 165 beschreibt, wie die Fehlstelle durch einen kegelstumpfförmigen Bohrer ausgearbeitet wird und ein Holzkegel in diese Vertiefung eingesetzt wird. Ein wesentlicher Nachteil dieses Verfahrens ist, dass die an der Holzoberfläche sichtbaren Flicken grundsätzlich kreisförmig sind. Das ist optisch nicht immer willkommen. Ein noch gewichtigerer Nachteil ist, dass das Verfahren für Risse und andere längliche Fehlstellen prinzipiell ungeeignet ist.

Das Patent US 1, 639, 082, Penning, beschreibt, wie ein Sägeblatt mit einem V-förmigen Profil an der Fehlstelle in das Holzstück eingesenkt wird und eine längliche Vertiefung erzeugt, die zueinander parallele Kanten aufweist und vorne und hinten spitz zuläuft. In diese etwa bootsförmige Vertiefung werden 3 Holzstücke eingeschlagen und eingeleimt, deren überstehende Teile anschliessend wieder entfernt werden müssen.

Ein wesentlicher Nachteil dieses Verfahrens ist, dass die Holzflicken prinzipiell nicht genau formschlüssig zu der in das Holz eingebrachten Vertiefung sind. Daher ist die Belastbarkeit der Verklebung nicht sehr gut. Ein weiterer Nachteil ist, dass die Fugen zwischen dem Flicken und der eingebrachten Vertiefung sowie zwischen den insgesamt 3 eingesetzten Holzstücken nach wie vor deutlich sichtbar sind und - je nach Verklebung - eine vollständige Kraftübertragung kaum ermöglichen.

Das Patent US 1, 005, 546, Hobart, beschreibt ein zylindrisches Sägeblatt. An die Unterseite dieses Sägeblattes wird das zu flickende Holzstück soweit herangehoben, das das Sägeblatt in das Holzstück eintaucht. Dann wird das Sägeblatt über einen Spindeltrieb parallel zur Holzoberfläche bewegt und sägt dabei eine Nut in das Holzstück, deren Wände zueinander im Rahmen der Sägegenauigkeit parallel verlaufen und deren Bodenfläche an den Enden der Nut tangential in ein Zylindersegment übergeht. Zum Verschliessen dieser Nut wird eine Leiste mit rechteckigem Profil benötigt, deren Stirnseiten wiederum zylindersegmentförmig sind und sich tangential an die Unterseite des Holzflickens anschließen.

Dieses Prinzip ist bereits seit rund 100 Jahren bekannt, aber wird derzeit praktisch gar nicht benutzt. Die Gründe dafür beschreibt bereits 1926 das Patent US 1, 639, 082: Der eingesetzte Holzflicken ergibt grundsätzlich ein rechteckiges Erscheinungsbild, das in ansonsten homogenen Holzoberflächen als optisch störender Fremdkörper empfunden wird.

Um die Flickleiste in die Nute einbringen zu können, wurden ihre Seitenflächen "angeschrägt", so dass ein trapezförmiges Profil entstand. Daher hatten die Seitenflächen nur im Bereich der Oberfläche einen direkten Kontakt mit dem zu flickendem Holzstück. Der größere Teil der nach aussen nicht sichtbaren Flächen der Flickleiste stand also nicht in Kontakt mit der Nut, sondern war dazu beabstandet, so dass sich eine Fuge ergab. Da ein Holzleim mit einer hohen Haftkraft prinzipiell nicht zum Ausgiessen derartiger Hohlräume geeignet ist, folgte daraus eine nur ungenügende Verbindung des Holzflickens mit der Nut und damit eine Schwächung des Holzstückes an dieser Stelle. Eine derartige trapezförmige Flickleiste zur Einbringung in eine Nut für die Reparatur von Sperrholz, Furnier, Bauholz und ähnlichem ist aus der Patentschrift US 2,674,770 A bekannt.

Aus diesen Gründen sind rechteckige Holzflecken auf aktuellem Stand der Technik nicht gebräuchlich.

Ihre rechteckige Form wird jedoch durch die zunehmende Verbreitung von sog. Leimholz wieder hoch aktuell, das aus zahlreichen, miteinander verklebten, quaderförmigen Holzstücken besteht. Die Oberfläche von derartigem Leimholz besteht im Prinzip aus zahlreichen, aneinander grenzenden Rechtecken.

Auf diesem Hintergrund hat sich die Erfindung die Aufgabe gestellt, eine Methode für das "Flicken" von Fehlstellen in Holzplatten zu entwickeln, die neben der Erzeugung einer relativ festen Verbindung darauf abzielt, das die Flickleisten relativ rasch, einfach und dennoch exakt eingesetzt werden können.

Die Lösung dieser Aufgabe wird durch die Merkmale des Kennzeichens des Anspruchs 1 wiedergegeben. Das wesentliche Merkmal der erfindungsgemäßen Holzflicken ist also, dass ihre Seitenwände zum größten Teil zueinander parallel ausgerichtet sind und deshalb auf einer relativ großen Fläche an den Seitenwänden der Nut anliegen, so dass sie gut mit diesen verklebt werden können. Aber trotzdem können sie treffsicher und ohne Beschädigung der Kanten der Nut eingesetzt werden, da sie an wenigstens einer der beiden unteren Kanten etwas abgerundet oder abgeschrägt sind. Die Abschrägung ist eine schmale, schräg zu den anderen Flächen ausgerichtete Ebene, die auch als Fase bezeichnet wird. Eine andere, übliche Bezeichnung ist, dass die Ecke "abgefast" ist.

Gemäß der Erfindung wird die Fräse auf der Holzfläche mit einer Grundplatte gleitend verschoben. In die Grundplatte ist ein Werkzeugfenster eingeschnitten, in welches das Holzbearbeitungswerkzeug absenkbar ist.

Für ein möglichst schnelles und akkurates Verschließen der Nut ist es effizient, auf serienmäßig mit geringen maßlichen Toleranzen gefertigte Flickleisten zurückzugreifen. Die Vorteile einer mechanisch und optisch perfekten Flickung der Fehlstelle durch eine gute Maßhaltigkeit dieser vorgefertigten Flickleisten werden nur dann nutzbar, wenn auch die dazu komplementäre Nut mit möglichst der gleichen Genauigkeit erstellt wird.

Eine sinnvolle Voraussetzung dafür ist eine möglichst exakte Führung der Fräse auf der zu flickenden Holzfläche. Erfindungsgemäß weist die Fräse hierfür an der Unterseite ihrer Grundplatte eine Führungsnut auf, in welcher ein Führungslineal eingreift,
das auf der Holzfläche aufliegt oder mit zwei kleinen Dornen auf der Holzfläche gegen Verrutschen gesichert ist. Dieses Führungslineal führt die Fräse beim Verschieben auf der Holzfläche in einer Geraden.

Um das Spiel des Führungslineals in der Führungsnut einstellen und auf das notwendige Minimum begrenzen zu können, ist in der Führungsnut zu beiden Seiten des Führungslineals je ein Gleitstück eingelassen. Der Abstand der Oberfläche wenigstens eines dieser beiden Gleitstücke zur Oberfläche der Führungsnut kann durch eine Stellschraube oder eine andere Einrichtung verändert werden, wodurch das Spiel justiert werden kann. Sinnvollerweise sollte das Gleitstück eine Oberfläche mit einem sehr geringen Haftreibungs- oder Gleitreibungsbeiwert aufweisen, also z.B. aus einem Kunststoff bestehen.

Wenn die erfindungsgemäße Fräse zum Flicken von Leimholz mit rechteckigen Teilflächen verwendet werden soll, so ist es wünschenswert, dass die rechteckige Öffnung der Nut zumindest parallel zu den Begrenzungslinien der anderen Teilrechtecke verläuft. Idealerweise sollte ein Teilrechteck vollständig und akkurat ausgefräst werden. Dafür schlägt die Erfindung vor, dass an beiden Enden des Führungslineals je ein Zeiger etwa im rechten Winkel angeformt ist. Die Spitzen dieser beiden Zeiger markieren die Ebene der Seitenwand einer Nut. Bei Leimholz ist die Seitenkante einer Nut vorzugsweise die Leimkante zwischen zwei miteinander verleimten Holzstücken.

Die Bezeichnung "Ecke" für den Bereich des Profils, in dem die Flickenseitenwände in die Flickenunterseite übergehen, sagt aus, dass die Breite der Abrundung oder die Breite der schräg ausgerichteten Fläche im Vergleich zu den übrigen Abmessungen des Profils so klein ist, dass das Profil insgesamt immer noch im wesentlichen rechteckig erscheint. Genau genommen ist das Profil mit zwei "abgefasten Ecken" jedoch ein unregelmäßiges Sechseck. Wenn die "Ecken" abgerundet sind, weist das Profil bei detaillierter Betrachtung nur noch 2 Ecken auf.

Der erfindungsgemäße Vorteil der relativ großen Klebefläche für den Flicken bei trotzdem relativ leichtem Einsetzen wird schon dann erreicht, wenn nur eine der beiden "unteren Ecken" abgefast oder abgerundet wird. Dann ist beim Einsetzen des Flickens jedoch zu beachten, dass zuerst die Flickleiste gegenüber der Nut geringfügig verschwenkt werden muss, damit zuerst die Seitenwand mit der "scharfkantigen", nicht abgefasten Ecke des Profils in Berührung mit der Seitenwand der Nut gebracht werden kann. Erst dann kann die Flickleiste in die lotrechte Position verschwenkt werden, in der die Flickenseitenwände parallel oder sogar fluchtend zu den Seitenwänden der Nut verlaufen. Beim Einpressen des Flickens ist dann von außen her sicherzustellen, dass diese Parallelität während des Einsetzvorganges erhalten bleibt.

Je nach den Dimensionen und den gewählten Toleranzen kann ein solches, unsymmetrisches Profil besondere Vorrichtung oder ein spezielles Training des Personals erfordern. Diese Probleme können recht einfach dadurch vermieden werden, dass die beiden "Ecken" des Profils der Flickleiste spiegelsymmetrisch zueinander geformt sind. Dann zentriert sich die Flickleiste nahezu selbsttätig in der Nut, so dass der Vorgang des Einpressens erheblich vereinfacht und das Ergebnis verbessert wird.

Da Holzbearbeitungsmaschinen auf aktuellem Stand der Technik mit vertretbarem Aufwand eine Bearbeitungsgenauigkeit von besser als 1 mm erzielen können, ist es auch realistisch, die Flickleiste an ihren Stirnseiten mit einer derartigen Genauigkeit zylindrisch zu formen, dass auch diese Flächen mit den dazu komplementär geformten Bereichen in der Nut verklebt werden können. Auf diese Weise kann auch im allgemeinsten Fall die Flickleiste eines erfindungsgemäßen Holzflicksystems so gut mit dem zu flickenden Holzstück verbunden werden, dass der geflickte Bereich ebenso hoch belastbar ist wie die übrigen Bereiche des Holzstückes.

Durch die Fase oder die Rundung an den Kanten zwischen der Unterseite und den Seitenprofilen der Flickleiste wird die Flickleiste beim Einsetzen in die Nut sicher geführt und kann ohne Beschädigungen der Kanten in die Nut hineingedrückt werden.

Bei dieser einfachen Ausführungsform ist zu beachten, dass die Flickleiste bis zum Abbinden der Verleimung in ihrer Position fixiert werden muss, damit sie nicht etwa durch geringfügiges "Arbeiten" des zu flickenden Holzstückes oder andere Einflüsse wieder aus der Nut herausgleitet.

Um diese notwendige Fixierung zu ersparen, schlägt die Erfindung als eine Ausführungsvariante vor, dass die Flickleiste breiter als die Nut ist und deshalb nur durch Druck auf die Flickenoberseite in die Nut einpressbar ist. Die Dimension des Übermaßes über die Breite der Nut ist dabei so gewählt, dass die Flickleiste durch die schräg stehenden Bereiche angrenzend an ihre Unterseite - die sog. Fasen - beim Eindrücken der Flickleiste in die Nut akkurat zentriert wird. Durch eine genau vertikale Beaufschlagung der Flickenoberseite wird die Flickleiste vertikal in die Nut eingepresst. Die beiden Seitenwände der Nut wirken dann dank der Elastizität des Holzes wie ein Schraubstock, der sich von beiden Seiten um die Flickleiste "klammert" und sie dadurch fixiert. Dank dieser Fixierung ist keine weitere Einspannung oder andere Befestigung der Flickleiste mehr erforderlich. Auch bei manuellem Aufbringen der Druckkraft - z.B. durch Hammerschläge - reicht eine dazwischen gelegte, größere Holzplatte für eine exakte Ausrichtung und Verteilung der Druckkräfte.

Mit diesen Merkmalen wird erreicht, dass die erfindungsgemäße Flickleiste auf dem allergrößten Teil ihrer Oberfläche mit der Nut in der zu flickenden Holzfläche verbunden ist. Lediglich im Bereich der Fase bilden sich zwei sehr kleine und in ihrem Anteil nur geringfügige Hohlräume aus, die zur Aufnahme von überschüssigem Leim dienen können, der beim Eindrücken der Flickleiste in die Nut weggedrückt worden sein kann.

Praktische Versuche haben ergeben, dass es sinnvoll ist, die Flickleiste um 0,5 % bis 1,5 % breiter als die Nut zu dimensionieren. Ein derartiges Übermaß hat sich bei Flickleisten aus Nadelholz als geeignet erwiesen. Bei anderen Holzarten kann auch ein kleineres oder größeres Maß besser geeignet sein.

Für eine weitere Verbesserung der mechanischen Festigkeit der eingesetzten Flickleiste schlägt die Erfindung eine noch weiter verbesserte Passgenauigkeit zwischen der Nut und den Seitenwänden der Flickleiste vor. Je genauer die Seitenwände der Nut parallel zueinander und senkrecht zu der zu flicken Holzfläche verlaufen, desto geringer sind die Unterschiede in der Verteilung der Druckkräfte und der Verteilung des Leims auf den Seitenflächen der Flickleiste.

Dafür ist es hilfreich, das Holzbearbeitungswerkzeug zusätzlich zu den zylindrisch wirkenden Messern mit je einem weiteren Schnittmesser an seinen beiden Stirnseiten auszustatten. Das zylindrisch wirkende Messer rotiert parallel zur Drehachse des Holzbearbeitungswerkzeuges, die zusätzlichen Schnittmesser sind radial zur Drehachse ausgerichtet. Diese sog. "Vorschneider" schneiden die senkrechte Wandung der Nut gezielt heraus, die Oberflächengüte und die Toleranz der Seitenwände der Nut wird damit unabhängig von den Seitenkanten des Messers, das auf der zylindrischen Mantelfläche des Holzbearbeitungswerkzeuges rotiert.

Die Fräse eines erfindungsgemäßen Holzflicksystems kann stationär auf einen Bearbeitungstisch aufgebaut werden oder in eine Fertigungsstrasse integriert werden. In diesen Fällen wird das zu flickende Holzstück der Fräse zugeführt. Als Alternative kann jedoch auch das zu flickende Holzstück fixiert werden und die Fräse an die jeweilige Fehlstelle geführt werden. Die Fräse des erfindungsgemäßen Holzflicksystems kann z.B. als ein Handgerät ausgeführt werden, das manuell auf die zu flickende Holzplatte aufgesetzt und verschoben wird. Aber auch die Bewegung mit einem Handlingsystem oder Roboter ist denkbar.

Wenn das Holzbearbeitungswerkzeug, wie z.B. ein Fräskopf, senkrecht in die Holzfläche hineingesenkt worden ist und dann parallel zur Holzfläche verschoben wird, kann insbesondere bei sehr weichem Holz die Vorderkante des Fräskopfes einzelne Holzfasern der Holzfläche aus ihrem Verbund lösen und sie ausbrechen. Insbesondere dann, wenn der Fräskopf am gewünschten Ende der Nut angelangt ist, ist es sehr unschön, wenn dort aus der Kante der Nut Holzspäne herausgebrochen werden.

Um diesen Effekt zu vermeiden, schlägt die Erfindung vor, dass eine Splitterschutzplatte in das Werkzeugfenster der Grundplatte hineinragt. Sie ist an derjenigen Kante des Werkzeugfensters angeordnet, über welche die Messer des Holzbearbeitungswerkzeuges nach dem Spanabheben wieder aus dem Werkzeugfenster herausschwenken. Ihre Unterseite verläuft etwa bündig mit der Unterseite der Grundplatte. Ihre freie Kante ist bei maximaler Absenkung des Holzbearbeitungswerkzeuges nur um einen möglichst geringen Sicherheitsabstand von den Messern des Holzbearbeitungswerkzeuges entfernt.

In einer Ausführungsvariante ist diese Splitterschutzplatte quer zur Drehachse des Holzbearbeitungswerkzeuges verschiebbar, so dass sie auf den jeweiligen Durchmesser eines Fräskopfes eingestellt und bei Verschleiß nachgestellt werden kann. Der dabei einzustellende Bereich sollte vorzugsweise 0,1 mm bis 0,3 mm breit sein.

Da in Serie zu liefernde Flickleisten sinnvollerweise nur in einer einzigen oder in wenigen, abgestuften Längen gefertigt werden, sollte auch die Nut in der Holzfläche möglichst exakt auf eine dieser Längen abgestimmt sein. Um das sicherzustellen, schlägt die Erfindung ein Führungslineal mit angebauten Zeigern und Anschlägen sowie Markierungen vor, das auch als Schablone bezeichnet wird. Es kann vor dem Fräsen als getrenntes Werkzeug eingesetzt werden, um festzulegen, wo die Nut auf die Holzfläche eingebracht werden soll und welche Länge sie hat. Bei dieser Schablone ist auf den beiden Zeigern am Ende des Führungslineals je ein Anschlag montiert, welcher den Verfahrweg der Fräse auf die Länge der Flickleiste begrenzt.

Ein weitere sinnvolle Hilfe sind Markierungen auf dem Führungslineal, die die maximal zwischen den Anschlägen erreichbaren Endpunkte der Nut markieren.

Bei der Ausführung der Fräse als Handgerät fordern die Berufsgenossenschaften, dass die Einrichtung nur dann arbeitet, wenn zwangsläufig beide Hände an dem Gerät anfassen müssen. Nur dann ist sichergestellt, dass keine Hand versehentlich in den Fräskopf geraten kann. Dazu schlägt die Erfindung vor, dass der Motor und das Holzbearbeitungswerkzeug der Fräse in einer Vertikalführung auf der Grundplatte in die Holzfläche absenkbar sind. Mit der Grundplatte ist auch ein Handgriff gelenkig verbunden. Wenn er verschwenkt wird, wird dadurch eine Sperre in der Vertikalführung der Fräse freigegeben, so dass erst dann das Holzbearbeitungswerkzeug in die Holzfläche abgesenkt werden kann und darin parallel zur Holzoberfläche verschoben werden kann. Wenn der Handgriff und/oder der Motor nicht mehr aktiv von der Bedienperson verschwenkt bzw. nach unten gedrückt wird, bewegen Federn den Handgriff und den Motor wieder in ihre Ausgangsposition und schalten ihn selbstständig ab. Dadurch wird auch bei einem Unfall, wie z.B. einer plötzlichen Ohnmacht des Bedieners, eine unbeabsichtigte Verletzung weitestgehend ausgeschlossen.

Eine interessante Ausführungsvariante ist es, als Motor einen Elektromotor mit einem angeflanschten Winkelgetriebe zu verwenden, der auch als Trennschleifer verwendet werden kann, wenn er von der Fräse demontiert und mit einer Trennscheibe bestückt wird.

Das "Flicken" einer Fehlstelle in einer Holzfläche mit einem erfindungsgemäßem Holzflicksystem läuft in den folgenden Schritten ab:
Im ersten Schritt wird eine Schablone, bestehend aus Führungslineal, zwei Zeigern und je einem Anschlag auf den Zeigern auf die Holzfläche aufgelegt und vorzugsweise durch zwei Dorne gegen Verschieben gesichert. Dabei muss die Schablone so auf das Holzstück gelegt werden, dass sich die zu reparierende Fehlstelle in der Nähe der Verbindungslinie zwischen den Spitzen der beiden Zeiger befindet und zwar auf der von der Fräse abgewandten Seite. In der anderen Richtung muss die Schablone so verschoben werden, dass sich die Fehlstelle zwischen den Markierungen auf dem Führungslineal befindet, welche die max. erreichbare Länge der Nut markieren.

Dann wird im zweiten Schritt die Fräse mit ihrer Führungsnut auf das Führungslineal der Schablone aufgesetzt, wobei sie an denjenigen Anschlag anschlägt, von dem die Arbeitsrichtung der Messer des eintauchenden Holzbearbeitungswerkzeuges hinwegweisen.

Im dritten Schritt wird durch Verschwenken des Handgriffes gegenüber der Grundplatte die Sperre in der Vertikalführung der Fräse freigegeben, so dass das Holzbearbeitungswerkzeug in die Holzfläche abgesenkt werden kann. Dabei wird der Motor in Drehung versetzt, so dass das Holzbearbeitungswerkzeug mit dem Abheben von Spänen beginnt. Indem das Holzbearbeitungswerkzeuges in der abgesenkten Position bis zum anderen Anschlag verfahren wird, wird eine Nut in die Holzfläche eingefräst.

In diese Nut wird im vierten Schritt Klebstoff eingebracht. Im fünften Schritt wird eine Flickleiste in die Nut bis zum Anschlag eingepresst, so dass sie nicht nur an den Seitenwänden, sondern auch an ihrer Unterseite mit den dazu komplementären Flächen der Nut in innige Verbindung gebracht und dadurch verklebt wird.

In Abhängigkeit von der Einsenktiefe der Flickleiste in die Nut werden die beiden Verfahren "Vorkosmetik" und "Nachkosmetik" unterschieden. Beim Verfahren der sog. "Vorkosmetik" ist die Tiefe der Nut so dimensioniert, dass die Flickleiste mit ihrer vollen Höhe darin eingesenkt werden kann und die Flickenoberseite etwa bündig mit der Holzfläche verläuft. Bei diesem Verfahren wird in einem anschließenden Bearbeitungsgang die gesamte Oberfläche, also sowohl die Flickenoberseite, als auch die Holzfläche nochmals glatt gehobelt.

In dem alternativen Verfahren der "Nachkosmetik" ist die Tiefe der Nut etwas kleiner, so dass der Holzflicken nur zum größten Teil darin eingesenkt werden kann. In der Praxis ragen oft nur etwa 5 % seiner Höhe über die angrenzende Holzfläche hinaus. In einem anschließenden Arbeitsgang wird nur diese überstehende Höhe der Flickleiste abgetragen.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:

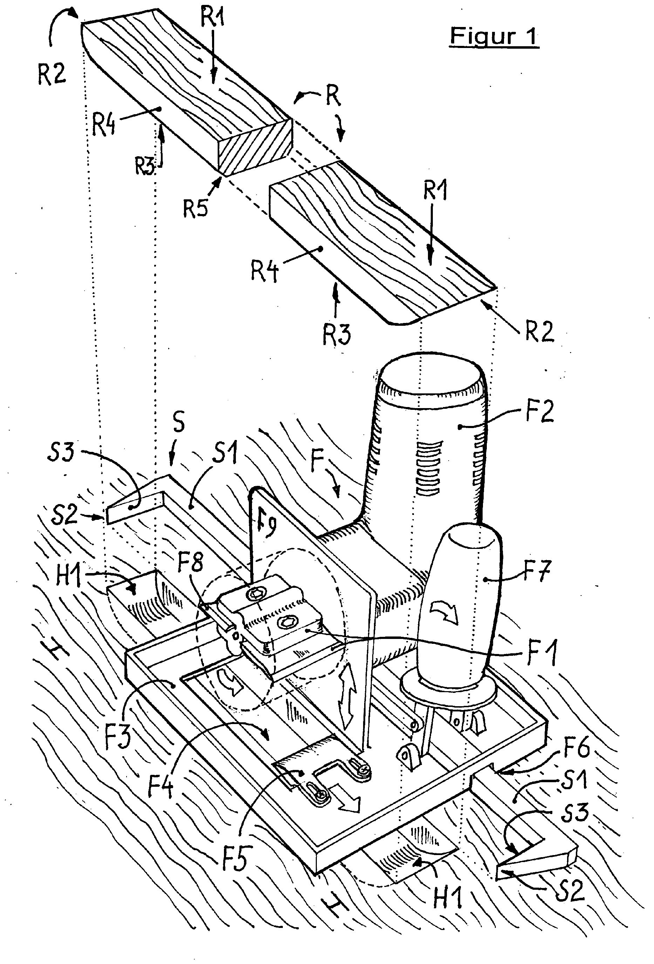

- Figur 1: Perspektivische Darstellung einer Fräse auf einer Holzfläche mit einer Schablone zur Führung und einer darüber schwebenden Flickleiste

In **Figur 1** ist als Schrägbild ein erfindungsgemäßes Holzflicksystem dargestellt, bestehend aus einer Fräse F, die auf einer Holzfläche H entlang gleitet und von einer Schablone S geführt wird, um eine Nut H1 in die Holzfläche H zu fräsen.

In Figur 1 ist im Mittelpunkt die Fräse F dargestellt. Mit ihrer Grundplatte F3 ruht sie auf der zu bearbeitenden Holzfläche H. In die Grundplatte F3 ist das Werkzeugfenster F4 eingebracht, in welches das Holzbearbeitungswerkzeug F1 absenkbar ist.

In Figur 1 ist gut zu erkennen, dass das Holzbearbeitungswerkzeug F1 mit seiner Halteplatte für die Messer drehbar in einer Vertikalplatte F9 gelagert ist, die senkrecht auf der Grundplatte F3 am Rande des Werkzeugfensters F4 aufragt. Auf der Vorderseite dieser Platte ist das Holzbearbeitungswerkzeug F1 zu erkennen, dass in diesem Fall auf der zum Betrachter weisenden Seite ein Messer aufweist, dessen Schnittkante parallel zur Drehachse des Holzbearbeitungswerkzeuges F1 rotiert. Dieses Messer fräst die Unterseite der Nut H1 und die zylindermantelförmigen Stirnkanten der Nut H1 heraus.

An der benachbarten Kante der Halteplatte des Holzbearbeitungswerkzeuges F1 ist eines der beiden Seitenschnittmesser F8 sichtbar. Das zweite Seitenschnittmesser F8, das zum ersten Seitenschnittmesser F8 parallel verläuft, ist in Figur 1 verdeckt und daher nicht zu erkennen. In Figur 1 gut nachvollziehbar ist jedoch, dass die beiden Seitenschnittmesser F8 die Seitenwände der Nut H1 bearbeiten. Sie können unabhängig vom mittleren, in Figur 1 auf den Betrachter zu weisenden Messer justiert werden. Je exakter sie parallel zueinander eingestellt sind, desto geringer ist die Abweichung der damit gefrästen Seitenwände der Nut H1 von der exakten Parallelität. Figur 1 veranschaulicht, dass mit der Option der zusätzlichen Seitenschnittmesser F8 die Passgenauigkeit des Holzflickens R in der Nut H1 deutlich verbessert werden kann. Damit steigt auch die Belastbarkeit der Klebverbindung und damit der gesamten, geflickten Stelle deutlich an.

Auf der Rückseite der Vertikalplatte F9 ist in diesem Ausführungsbeispiel ein Winkelgetriebe angeflanscht, dass mit dem Motor F2 verbunden ist.

In Figur 1 ist die Vertikalführung, mit der die Baugruppe aus dem Holzbearbeitungswerkzeug F1, dem Winkelgetriebe und dem Motor F2 vertikal nach unten abgesenkt werden kann, der Übersichtlichkeit halber nicht eingezeichnet. Durch einen Doppelpfeil auf der Vertikalplatte F9 ist jedoch die Richtung symbolisiert und deshalb gut nachvollziehbar, wie das Holzbearbeitungswerkzeug F1 durch Abwärtsbewegung in die Holzfläche H eintaucht. Bei maximaler Eintauchtiefe ist die maximale Tiefe der Nut H1 erreicht. In dieser Stellung in der Vertikalen muss das Holzbearbeitungswerkzeug F1 parallel zur Holzfläche H zwischen den beiden Anschlägen S3 auf den beiden Zeigern S2 verfahren werden.

Um auf diesem Weg einwandfrei geführt zu werden, weist die Grundplatte F3 die Führungsnut F6 auf, in die von der Unterseite her das Führungslineal S1 der Schablone S eingreift und für eine genau gerade Bewegung der Fräse F sorgt.

In Figur 1 ist an der rechten Seite der Handgriff F7 zu sehen. Er ist gelenkig mit der Grundplatte F3 verbunden. Der Übersichtlichkeit halber ist in Figur 1 nicht dargestellt, wie der Handgriff F7 durch Verschwenken über einen Hebel die Vertikalführung der Aufhängung des Holzbearbeitungswerkzeuges F1 freigibt, sodass sie durch Druck auf das Gehäuse des Motors F2 nach unten bewegt werden kann und in die Holzfläche H eintaucht.

Die in Figur 1 dargestellte Position der Fräse F etwa in der Mitte zwischen den beiden Anschlägen S3 und mit angehobenem Holzbearbeitungswerkzeug F1 dient nur der Veranschaulichung aller Komponenten der Erfindung. In Figur 1 ist gut nachvollziehbar, dass diese Position in einem typischen Arbeitszyklus jedoch nicht durchlaufen wird und stattdessen der Arbeitszyklus wie folgt abläuft:
Die Grundplatte F3 wird mit ihrer Führungsnut F6 dort auf das Führungslineal S1 der Schablone S aufgesetzt, wo sie mit ihrer hinten gezeichneten Kante den hinteren Anschlag S3 auf dem hinteren Zeiger S2 berührt. In dieser Position wird durch Verschwenken des Handgriffes F7 die Sperre der - hier nicht gezeichneten - Vertikalführung gelöst, sodass der Motor F2 mitsamt dem daran angeflanschten Winkelgetriebe und dem auf dessen Abtriebswelle drehbar montierten Holzbearbeitungswerkzeug F1 in die Holzfläche H abgesenkt werden kann. In dieser abgesenkten Position wird die Fräse F entlang dem Führungslineal S1 so weit verschoben, bis der im Vordergrund liegende Anschlag S3 auf dem Zeiger S2 erreicht ist.

Bei Betrachtung von Figur 1 ist gut nachzuvollziehen, dass beim Erreichen des vorderen Anschlages S3 das Holzbearbeitungswerkzeug F1 mit dem Motor F2 in der Vertikalführung nach oben verschoben werden muss und der Motor F2 dann anhalten muss.

In Figur 1 schwebt zeichnerisch über der Nut H1 die Flickleiste R. Die vier gepunkteten Linien von den Ecken der Nut H1 nach oben zur Flickleiste R verdeutlichen, dass als nächster Schritt die Flickleiste R in die Nut H1 eingesenkt wird. In Figur 1 ist gut zu erkennen, dass die Flickenunterseite R3 tangential in die zylindrisch geformten Stirnflächen R2 der Flickleiste übergeht. Sehr deutlich wird auch, dass die Flickenoberseite R1 rechteckig ist und der Öffnung der Nut H1 entspricht, was in Figur 1 durch die gepunkteten Linien betont wird.

In Figur 1 ist die schwebend dargestellte Flickleiste R zeichnerisch in ihrer Mitte aufgeschnitten, um ihr Profil sichtbar werden zu lassen. Dadurch ist sofort erkennbar, dass sie an ihren beiden unteren Kante abgeschrägt ist, sodass sie innerhalb der Nut H1 in der Holzfläche H sehr gut zentriert werden kann.

Nachvollziehbar wird auch die Ausführungsvariante einer erfindungsgemäßen Flickleiste R, deren Breite ein geringes Übermaß über die Breite der eingefrästen Nut hat. Es wird in Figur 1 plausibel, dass ein erfindungsgemäßer Flickleisten deshalb in die Nut H1 hinein gepresst wird und sie dann vollständig ausfüllt. Dann integriert er sich perfekt in die Holzfläche H eines Leimholzstückes aus Holzquadern und stimmt dank seiner Form optisch mit den anderen rechteckigen Elementen gut überein.

Beim Betrachten des Querschnittes der Flickleiste R mit den an der Unterkante abgeschrägten Ecken wird plausibel, dass ein Überschuss an Leim nach Art eines ebenfalls angeschrägten Schiffsbuges von der eindringenden Flickleiste systematisch zur Seite gedrängt wird und dadurch in eventuelle Unregelmäßigkeit in der Wand der zu flickenden Nut H1 gedrängt wird, vor allem aber in den Hohlraum zwischen der "abgeschrägten" Ecke des Profils der Flickleiste R und dem rechteckigen Profil der Nut.

In Figur 1 ist im vorderen Bereich des Werkzeugfensters F4 zu erkennen, wie die Splitterschutzplatte F5 in das Werkzeugfenster F4 hineinragt. In Figur 1 ist eingezeichnet, wie durch Langlöcher und je eine Schraube die Splitterschutzplatte F5 quer zur Drehrichtung des Holzbearbeitungswerkzeuges F1 verschoben und so justiert werden kann, dass in der am weitesten abgesenkten Position des Holzbearbeitungswerkzeuges F1 nur ein winziger Spalt zwischen der freien Kante der Splitterschutzkante F5 und dem rotierenden Messer des Holzbearbeitungswerkzeuges F1 verbleibt.

In Figur 1 ist gut nachvollziehbar, dass bei einer Arbeitsbewegung der Fräse F auf den Betrachter zu durch die Splitterschutzplatte F5 verhindert wird, dass sich aus der Holzfläche H Splitter lösen, die durch das nach oben hinweg schwenkende Messer des Holzbearbeitungswerkzeuges F1 angehoben werden könnten.

### Bezugszeichenliste

- F: Fräse zum Einbringen der Nut H1 in die Holzfläche H
- F1: Holzbearbeitungswerkzeug an der Fräse F
- F2: Motor für Holzbearbeitungswerkzeug F1
- F3: Grundplatte an Unterseite der Fräse F
- F4: Werkzeugfenster in Grundplatte F3
- F5: Splitterschutzplatte, ragt in Werkzeugfenster F4 hinein
- F6: Führungsnut in Grundplatte F3,komplementär zu Schablone S
- F7: Handgriff auf Grundplatte F3, gibt Sperre in der Vertikalführung der Fräse F frei
- F8: Vertikalplatte am Rande des Werkzeugfensters F4

- H: Holzfläche mit zu flickender Fehlstelle
- H1: Nut in Holzfläche H, beseitigt eine Fehlstelle

- R: Flickleiste, komplementär zur Nut H1
- R1: Flickenoberseite der Flickleiste R
- R2: Stirnflächen der Flickleiste R
- R3: Flickenunterseite der Flickleiste R
- R4: Flickenseitenwand der Flickleiste R
- R5: Fase zwischen Flickenunterseite R3 und FlickenseitenwandR4

- S: Schablone zur Führung der Fräse F
- S1: Führungslineal der Schablone S
- S2: Zeiger an Führungslineal S1
- S3: Anschlag auf Zeiger S2

## Patentansprüche

1. Holzflicksystem zum Flicken von Fehlstellen in einer Holzfläche H durch Einfräsen einer Nut H1, die durch eine Flickleiste R wieder verschließbar ist, bestehend aus
- einer Fräse F mit einem zylindrisch wirkenden, rotierenden Holzbearbeitungswerkzeug F1,
- dessen Längsachse parallel zur Holzfläche H ausgerichtet ist und
- das durch einen Motor F2 drehbar ist und
- aus je einer Flickleiste R für jede Fehlstelle, wobei
- die Flickleiste R mit ihrer von der geflickten Holzfläche H weg weisenden Flickenoberseite R1 rechteckig ist und
- deren Stirnflächen R2 als Zylindersegmente geformt sind, die tangential in die Flickenunterseite R3 übergehen, und
- das Profil der Flickleiste R quer zu ihrer Längsrichtung im Wesentlichen rechteckig ist,
**dadurch gekennzeichnet, dass**
- wenigstens eine der beiden Ecken dieses Profils zwischen der Flickenunterseite R3 und den beiden Flickenseitenwänden R4 abgerundet ist oder als eine schmale, schräg zu den anderen Flächen ausgerichtete Ebene ausgebildet ist, die auch als Fase R5 bezeichnet wird, und
- die Fräse F an der Unterseite ihrer Grundplatte F3 eine Führungsnut F6 aufweist, in welche ein Führungslineal S1 eingreift, das auf der Holzfläche H aufliegt und die Fräse F beim Verschieben auf der Holzfläche H in einer Geraden führt,
- wobei in die Führungsnut F6 zu beiden Seiten des Führungslineals S1 je ein Gleitstück eingelassen ist und der Abstand wenigstens eines Gleitstückes zur Führungsnut F6 durch eine Stellschraube veränderbar ist, wodurch das Spiel des Führungslineals S1 in der Führungsnut F6 justierbar ist, und
- an beide Enden des Führungslineals S1 je ein Zeiger S2 etwa im rechten Winkel angeformt ist, wobei die Spitzen der Zeiger S2 die Ebene einer Seitenwand einer Nut H1 markieren.

2. Holzflicksystem nach Anspruch 1, **dadurch gekennzeichnet, dass** die beiden "Ecken" des Profils der Flickleiste R spiegelsymmetrisch zueinander geformt sind.

3. Holzflicksystem nach einem der vorhergehenden Ansprüche, **dadurch gekennzeichnet, dass**
- die Flickleiste R breiter als die Nut H1 ist und
- durch Druck auf die Flickenoberseite R1 in die Nut H1 einpressbar ist.

4. Holzflicksystem nach Anspruch 3, **dadurch gekennzeichnet, dass** die Flickleiste R um 0,5 bis 1,5 % breiter als die Nut H1 ist.

5. Holzflicksystem nach einem der vorhergehenden Ansprüche, **dadurch gekennzeichnet, dass** das Holzbearbeitungswerkzeug F1 zusätzlich zu den rotierenden, zylindrisch wirkenden Messern zwei weitere Seitenschnittmesser F8 aufweist, die die beiden Wände der Nut H1 zueinander parallel und senkrecht zur Holzfläche H formen.

6. Holzflicksystem nach einem der vorhergehenden Ansprüche, **dadurch gekennzeichnet, dass**
die Fräse F auf der Holzfläche H mit einer Grundplatte F3 gleitend verschiebbar ist, in die ein Werkzeugfenster F4 eingebracht ist,
- in welches das Holzbearbeitungswerkzeug F1 absenkbar ist und
- in das eine Splitterschutzplatte F5 hineinragt,
- die an derjenigen Kante des Werkzeugfensters F4 angeordnet ist, über welche die zylindrisch wirkenden Messer des Holzbearbeitungswerkzeuges F1 nach getaner Fräsarbeit wieder aus dem Werkzeugfenster F4 heraus schwenken und
- deren Unterseite etwa bündig mit der Unterseite der Grundplatte F3 verläuft und
- deren freie Kante bei maximaler Absenkung des Holzbearbeitungswerkzeuges F1 nur um einen möglichst geringen Sicherheitsabstand von den Messern des Holzbearbeitungswerkzeuges F1 entfernt ist.

7. Holzflicksystem nach Anspruch 6, **dadurch gekennzeichnet, dass** die Splitterschutzplatte F5 quer zur Drehachse des Holzbearbeitungswerkzeuges F1 verschiebbar ist

8. Holzflicksystem nach einem der vorhergehenden Ansprüche,
**dadurch gekennzeichnet, dass**
der Sicherheitsabstand etwa 0,1 bis 0,3 mm beträgt.

9. Holzflicksystem nach einem der vorhergehenden Ansprüche ,
**dadurch gekennzeichnet, dass** auf den beiden Zeigern S2 je ein Anschlag S3 angeordnet ist, der den Verfahrweg der Fräse F auf die Länge der Flickleiste R begrenzt.

10. Holzflicksystem nach dem vorhergehenden Anspruch, **dadurch gekennzeichnet, dass**
- das Führungslineal S1 und die beiden Zeiger S2 und die Anschläge S3 zusammen eine Schablone S zur Führung der Fräse F und zur Begrenzung der Länge der Nut H1 bilden und
- die Schablone S durch wenigstens 2 Dorne fixiert wird, die in die Holzfläche H eingreifen und
- die Begrenzungen der bei maximaler Absenkung des Holzbearbeitungswerkzeuges maximal erreichbaren Länge der Nut H1 auf dem Führungslineal S1 markiert sind.

11. Holzflicksystem nach einem der vorhergehenden Ansprüche, **dadurch gekennzeichnet, dass** der Motor F2 und das Holzbearbeitungswerkzeug F1 der Fräse F in einer Vertikalführung auf der Grundplatte F3 in die Holzfläche H absenkbar sind und ein Handgriff F7 gelenkig mit der Grundplatte F3 verbunden ist und nur durch ein Verschwenken des Handgriffs F7 gegen die Kraft einer Feder eine Sperre in der Vertikalführung der Fräse F freigebbar ist.

12. Holzflicksystem nach einem der vorhergehenden Ansprüche, **dadurch gekennzeichnet, dass** der Motor F2 ein Elektromotor mit einem angeflanschten Winkelgetriebe ist, der nach Demontage von der Fräse F als Trennschleifer verwendbar ist.

## Claims

1. Wood patching system for patching defects in a wood surface H by milling a groove H1, which can be sealed again by means of a patching strip R, comprising
- a milling machine F with a cylindrically acting, rotating wood machining tool F1,
- of which the longitudinal axis is oriented parallel to the wood surface H and
- which can be rotated by means of a motor F2 and
- a patch strip R in each case for each defect, wherein
- the patch strip R with its patch top face R1 facing away from the patched wood surface H is rectangular and
- the end faces R2 of said patch strip are shaped as cylindrical segments, which merge tangentially into the patch underside R3, and
- the profile of the patch strip R, transversely to its longitudinal direction, is essentially rectangular,
**characterised in that**
- at least one of the two corners of said profile is rounded between the patch underside R3 and the two patch side walls R4 or is shaped as a narrow plane that is oriented obliquely to the other surfaces, which is also designated a chamfer R5, and
- the milling machine F, on the underside of its base plate F3, has a guide groove F6, in which a guide ruler S1 engages, which rests on the wood surface H and guides the milling machine F in a straight line during displacement on the wood surface H,
- wherein, in the guide groove F6 on both sides of the guide ruler S1, one sliding piece in each case is inset and the distance of at least one sliding piece to the guide groove F6 can be changed by means of a setting screw, by means of which the play of the guide ruler S1 in the guide groove F6 is adjustable, and
- at both ends of the guide ruler S1, a pointer S2 in each case is formed approximately at a right angle, wherein the tips of the pointers S2 mark the plane of a side wall of a groove H1.

2. Wood patching system according to claim 1, **characterised in that** the two "corners" of the profile of the patch strip R are shaped such that they are mirror symmetrical with respect to one another.

3. Wood-patching system according to one of the preceding claims, **characterised in that**
- the patch strip R is wider than the groove H1, and
- by means of pressure on the patch top R1, it can be pressed into the groove H1.

4. Wood patching system according to Claim 3, **characterised in that** the patching strip R is 0.5 to 1.5% wider than the groove H1.

5. Wood patching system according to one of the preceding claims, **characterised in that** the wood machining tool F1 has, in addition to the rotating, cylindrically acting knives, two further lateral cutting knives F8, which form the two walls of the groove H1 such that they are parallel to one another and perpendicular to the wood surface H.

6. Wood-patching system according to one of the preceding claims, **characterised in that**
the milling machine F can be slid on the wood surface H with a base plate F3, into which a tool window F4 is introduced,
- into which the wood machine tool F1 can be lowered and
- Into which the splinter guard plate F5 projects.
- which is disposed on that edge of the tool window F4, via which the cylindrically acting knives of the wood machining tool F1 can be pivoted out of the tool window F4 again when the milling work has been performed, and
- of which the underside runs approximately flush with the underside of the base plate F3, and
- of which, on maximum lowering of the wood machining tool F1, the free edge is only distant from the knives of the wood machining tool F1 by a least possible safety clearance.

7. Wood patching system according to Claim 6, **characterised in that** the splinter guard plate F5 can be displaced transversely to the axis of rotation of the wood machine tool F1.

8. Wood-patching system according to one of the preceding claims, **characterised in that**
the safety clearance is approximately 0.1 to 0.3 mm.

9. Wood-patching system according to one of the preceding claims, **characterised in that** a stop S3 in each case is disposed on the two pointers S2, which limits the traverse distance of the milling machine F to the length of the patch strip R.

10. Wood patching system according to the preceding claim,
**characterised in that**
- the guide ruler S1 and the two pointers S2 and the stops S3 together form a template S for guiding the milling machine F and for limiting the length of the groove H1 and
- the template S is fixed by at least 2 mandrels, which engage in the wood surface H and
- the limits of the maximum achievable length of the groove H1, on maximum lowering of the wood machining tool, are marked on the guide ruler S1.

11. Wood-patching system according to one of the preceding claims, **characterised in that** the motor F2 and the wood machining tool F1 of the milling machine F can be lowered in a vertical guide on the base plate F3 into the wood surface H, and a handle F7 is connected in an articulated manner to the base plate F3, and a lock in the vertical guide of the milling machine F can only be released by pivoting the handle F7 against the force of a spring.

12. Wood-patching system according to one of the preceding claims, **characterised in that** the motor F2 is an electric motor with a flange-mounted angle gearing, which, after demounting from the milling machine F, can be used as a cutting grinder.

## Revendications

1. Système de réparation du bois destiné à réparer des points de défauts dans une surface en bois H en fraisant une rainure H1 qui peut être à nouveau refermée à l'aide d'une baguette de réparation R, consistant en
- une fraise F avec un outil rotatif d'usinage du bois à effet cylindrique F1,
- dont l'axe longitudinal est orienté parallèlement à la surface en bois H et
- qui peut être mis en rotation par un moteur F2,
- qui est composé à chaque fois d'une baguette de réparation R pour chaque point de défaut, sachant que
- la baguette de réparation R avec sa face supérieure de réparation R1 détournée de la surface en bois réparée H est quadrangulaire et
- dont les surfaces frontales R2 prennent la forme de segments cylindriques qui passent progressivement de façon tangentielle dans la face inférieure de réparation R3,
- le profil de la baguette de réparation R perpendiculaire au sens longitudinal étant pour l'essentiel quadrangulaire,
**caractérisé par le fait que**
- au moins un des deux coins de ce profil est arrondi entre la face inférieure de réparation R3 et les deux parois latérales de réparation R4 ou bien prend la forme d'un plan étroit orienté en biais par rapport aux autres surfaces, qui est également désigné comme chanfrein R5,
- la fraise F sur la face inférieure de sa plaque de base F3 présentant une rainure de guidage F6 dans laquelle s'engrène une règle de guidage S1, qui repose sur la surface en bois H et conduit la fraise F dans une ligne droite lors du déplacement sur la surface en bois H,
- sachant qu'un coulisseau est à chaque fois inséré, dans la rainure de guidage F6, dans chacun des deux côtés de la règle de guidage S1 et que la distance d'au moins un coulisseau par rapport à la rainure de guidage F6 peut être modifiée par une vis de réglage, grâce à quoi le jeu de la règle de guidage peut être ajusté dans la rainure de guidage F6,
- une aiguille S2 étant formée à peu près à angle droit sur les deux extrémités de la règle de guidage, sachant que les pointes de l'aiguille S2 marquent le plan de la paroi latérale d'une rainure H1.

2. Système de réparation du bois selon la revendication 1, **caractérisé par le fait que** les deux « coins » du profil de la baguette de réparation R sont formés symétriquement en miroir l'un par rapport à l'autre.

3. Système de réparation du bois selon une des revendications précédentes, **caractérisé par le fait que**
- la baguette de réparation R est plus large que la rainure H1 et
- peut être pressée dans la rainure H1 en pressant sur la face supérieure de réparation R1.

4. Système de réparation du bois selon la revendication 3, **caractérisé par le fait que** la baguette de réparation R est de 0,5 à 1,5% plus large que la rainure H1.

5. Système de réparation du bois selon une des revendications précédentes, **caractérisé par le fait que** l'outil d'usinage du bois F1 présente, en sus des couteaux rotatifs à effet cylindrique, deux autres couteaux latéraux F8 qui forment deux autres parois de la rainure H1, parallèles l'une à l'autre et verticales par rapport à la surface en bois H.

6. Système de réparation du bois selon une des revendications précédentes, **caractérisé par le fait que** la fraise F peut être déplacée par glissement sur la surface en bois H avec une plaque de base F3 dans laquelle est incorporée la fenêtre d'outil F4,
- dans laquelle l'outil d'usinage du bois F1 peut être abaissé et
- dans laquelle dépasse une plaque de protection contre les éclats F5,
- qui est disposée sur le bord de la fenêtre d'outil F4 au-dessus de laquelle basculent à nouveau les couteaux à effet cylindrique de l'outil d'usinage du bois F1 une fois leur travail de fraisage accompli,
- dont la face inférieure suit un parcours à peu près affleurant avec la face inférieure de la plaque de base F3 et
- dont le bord libre est, lorsque l'outil d'usinage du bois F1 est abaissé au maximum, seulement éloigné d'une distance de sécurité aussi faible que possible des couteaux de l'outil d'usinage du bois F1.

7. Système de réparation du bois selon la revendication 6, **caractérisé par le fait que** la plaque de protection contre les éclats F5 peut être déplacée perpendiculairement à l'axe de rotation de l'outil d'usinage du bois F1.

8. Système de réparation du bois selon une des revendications précédentes, **caractérisé par le fait que** la distance de sécurité est d'environ 0,1 à 0,3 mm.

9. Système de réparation du bois selon une des revendications précédentes, **caractérisé par le fait que** sur chacune des deux aiguilles S2 est disposée une butée S3 qui limite la course de déplacement de la fraise F à la longueur de la baguette de réparation R.

10. Système de réparation du bois selon une des revendications précédentes, **caractérisé par le fait que**
- la règle de guidage S1, les deux aiguilles S2 et les butées S3 constituent ensemble un gabarit S destiné à guider la fraise F et à limiter la longueur de la rainure H1,
- le gabarit S étant fixé par au moins 2 mandrins qui s'engrènent dans la surface en bois H,

11. Système de réparation du bois selon une des revendications précédentes, **caractérisé par le fait que** le moteur F2 et l'outil d'usinage du bois F1 de la fraise F peuvent être abaissés dans un guidage vertical sur la plaque de base F3 dans la surface en bois H, et qu'une poignée F7 est reliée de façon articulée avec la plaque de base F3, un verrouillage ne pouvant être libéré de la fraise F qu'en faisant pivoter la poignée F7 contre la force d'un ressort.

12. Système de réparation du bois selon une des revendications précédentes, **caractérisé par le fait que** le moteur F2 est un moteur électrique avec un renvoi d'angle bridé qui peut être utilisé en tant que tronçonneuse-meuleuse après démontage de la fraise.
